# EUROPEAN PATENT SPECIFICATION

(11) **EP 2 584 002 B1**
(45) Date of publication and mention of the grant of the patent: **10.05.2017**
(21) Application number: 11797892.4
(22) Date of filing: 31.03.2011
(51) Int. Cl.: C08L 63/00, C08G 59/20, C08K 3/36, C08K 5/3445, C08K 5/5419, F16J 15/10

(54) **ACRYLIC RUBBER COMPOSITION, VULCANIZATE, HOSE PART, AND SEALING PART**
ACRYLKAUTSCHUKZUSAMMENSETZUNG, VULKANISAT, SCHLAUCHTEIL UND DICHTUNGSTEIL
COMPOSITION DE CAOUTCHOUC ACRYLIQUE, VULCANISAT, COMPOSANT DE TUYAU FLEXIBLE, ET COMPOSANT D'ÉTANCHÉITÉ

(30) Priority: 21.06.2010 JP 2010140071
(43) Date of publication of application: 24.04.2013
(73) Proprietor: Denka Company Limited, Tokyo 103-8338 (JP)
(72) Inventor: IKARI Satoru, Itoigawa-city Niigata 949-0393 (JP); ABE Yasushi, Itoigawa-city Niigata 949-0393 (JP); MIYAUCHI Toshiaki, Itoigawa-city Niigata 949-0393 (JP)
(74) Representative: Gulde & Partner
(86) International application number: PCT/JP2011/058261
(87) International publication number: WO 2011/162004

(56) References cited:
- EP-A1- 2 154 196
- JP-A- 6 287 273
- JP-A- 7 278 411
- JP-A- 7 331 035
- JP-A- 2002 179 874
- JP-A- 2004 059 667

## Description

### Technical Field

The present invention relates to an acrylic rubber composition. More specifically, it relates to an acrylic rubber composition superior in the balance among processing stability, compression set, and tensile strength.

### Background Art

Vulcanizates of acrylic rubber compositions, which are superior in physical properties such as heat resistance, oil resistance, mechanical properties, and compression set properties, have been used widely as materials for hose parts, sealing parts, and antivibration rubber parts in automobile engine rooms.

Such an acrylic rubber composition should provide rubber with strength for use in automobile-related parts. Known as means for obtaining such an acrylic rubber composition superior in processing stability and tensile strength is, for example, a method of blending a carboxyl group-containing acrylic rubber with silica, an aliphatic polyvalent alcohol, a guanidine compound, and an aromatic diamine compound in particular amounts (see, for example, the following Patent Documents 1 to 3).

The method of vulcanizing acrylic rubber compositions varies according to the applications of the vulcanized rubber products, but these acrylic rubber compositions are subjected to steam vulcanization, press vulcanization, injection vulcanization or the like at a temperature of approximately 130 to 200°C for several minutes to several tens of minutes as primary vulcanization and also to hot-air vulcanization, for example in a Geer oven, at a temperature of approximately 140 to 200°C for several hours as secondary vulcanization.

Most of rubber hoses are produced by extrusion molding at a temperature of 50 to 130°C and subsequent steam vulcanization as primary vulcanization. Depending on the kinds of the hoses, for example in the case of air duct hoses, rubber hoses are produced, as they are first subjected to injection vulcanization or press vulcanization and then to hot-air vulcanization as the secondary vulcanization. Generally, acrylic rubber compositions that can exhibit mechanical properties sufficiently resistant to deformation in the primary vulcanization are demanded for production of sealing parts such as gaskets.

The acrylic rubber compositions do not show sufficient mechanical properties and rubber elasticity only by the primary vulcanization because of insufficient vulcanization, and thus, they are subjected to hot-air vulcanization as the secondary vulcanization. When a crosslinking agent is added to the acrylic rubber composition, an open roll, or alternatively a sealed mixer, such as kneader or Banbury mixer, is often used. Thus, processing stability prohibiting scorching (premature vulcanization before vulcanization step) of the rubber composition during kneading is demanded. There exists a state in which the rubber composition is heated during extrusion molding or injection molding and thus, the processing stability is an important property then for the rubber composition.

Silica is often used as a white reinforcing material. Silica has some favorable properties, for example, as it gives a product more stretchable, but, if used as it is, it may lead to unfavorable extrusion efficiency and give a product with insufficient mechanical properties and also insufficient compression set resistance. Silica-containing compositions have similar problems, when they are used for example as rubber hoses, air duct hoses, or sealing parts such as gaskets, and thus, there exists a need for an acrylic rubber composition having favorable processing stability and giving vulcanizates having sufficient mechanical properties and superior compression set resistance after primary vulcanization (e.g., steam vulcanization, press vulcanization, or injection vulcanization) and subsequent secondary vulcanization (e.g., hot-air vulcanization).JP7331035A discloses acrylic elastomer compositions comprising an acrylic elastomer containing an epoxy group, silica, an imidazole and a silane coupling agent having glycidoxy group and three alkoxy groups.

### Citation List

### Patent Documents

[Patent Document 1] Japanese Unexamined Patent Application Publication No. 2004-59668
[Patent Document 2] Japanese Unexamined Patent Application Publication No. 2008-239713
[Patent Document 3] Japanese Unexamined Patent Application Publication No. 2004-168885

### Summary of Invention

### Technical Problem

Accordingly, it is a main object of the present invention to provide an acrylic rubber composition that gives a vulcanizate having sufficient mechanical properties and compression set resistance.

### Solution to Problem

After intensive studies, the present inventors have found an acrylic rubber composition having high processing stability, sufficient mechanical properties, and favorable compression set resistance and the vulcanizate thereof and made the present invention.

Specifically, the present invention relates to
(1) an acrylic rubber composition, including the following components (A) to (D):
   (A) an epoxy group-containing acrylic rubber;
   (B) an imidazole compound represented by the following General Formula (1): 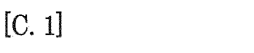 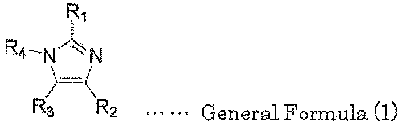 (in General Formula (1), R₁ represents a hydrogen atom, an alkyl group, a substituted alkyl group, an aryl group, or a carboxyl group; R₂ represents a hydrogen atom or an alkyl group; R₃ represents a hydrogen atom or an alkyl group; and R₄ represents a hydrogen atom, an alkyl group, a substituted alkyl group, or a carbonyl group):
   (C) silica at a pH of 5.5 to 9.0; and
   (D) a silane-coupling agent represented by the following General Formula (2): 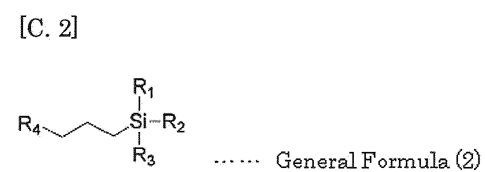 (in General Formula (2), R₁, R₂, and R₃ each represent an alkyl group, an aryl group, a substituted aryl group, or an alkoxy group; one or two substituent groups of R₁, R₂, and R₃ contain an alkoxy group; and R₄ represents a glycidoxy group).
(2) The acrylic rubber composition according to the present invention preferably contains silica in an amount of 20 to 80 parts by mass with respect to 100 parts by mass of the epoxy group-containing acrylic rubber.
(3) The acrylic rubber composition according to the present invention may contain the imidazole compound represented by General Formula (1) in an amount of 0.1 to 5 parts by mass with respect to 100 parts by mass of the epoxy group-containing acrylic rubber.
(4) The acrylic rubber composition according to the present invention may contain the compound represented by General Formula (2) in an amount of 0.1 to 2 parts by mass with respect to 100 parts by mass of the epoxy group-containing acrylic rubber.
(5) The silane-coupling agent may be one or more agents selected from the group consisting of diethoxyethyl group-containing silane-coupling agents, dimethoxyphenyl group-containing silane-coupling agents, dimethoxymethyl group-containing silane-coupling agents, and dimethoxybutyl group-containing silane-coupling agents. The silane-coupling agent is desirably contained in an amount of 0.1 to 2 parts by mass with respect to 100 parts by mass of the epoxy group-containing acrylic rubber.
(6) A vulcanizate may be prepared by vulcanizing the acrylic rubber composition.
(7) Further, hose parts or sealing parts may be prepared from the vulcanizate.

The term "A to B," as used in the present description, means "A or more and B or less."

### Advantageous Effects of Invention

The present invention provides an acrylic rubber composition having high processing stability and giving vulcanizates having sufficient mechanical properties and superior compression set resistance after secondary vulcanization (hot-air vulcanization) and the vulcanizate thereof.

### Description of Embodiments

Hereinafter, favorable embodiments of the present invention will be described.

Acrylic rubbers are rubbers produced by copolymerization of unsaturated monomers such as alkyl (meth)acrylate esters and monomers copolymerizable therewith. The alkyl (meth)acrylate esters means both alkyl acrylates and alkyl methacrylates.

It is possible to control the basic properties of the acrylic rubber composition obtained, including physical properties under ambient atmosphere, low-temperature resistance, and oil resistance, by properly selecting the kinds of the alkyl (meth)acrylate unsaturated monomers.

Examples of the alkyl (meth)acrylate unsaturated monomers include, but are not limited to, methyl acrylate, ethyl acrylate, n-propyl acrylate, n-butyl acrylate, isobutyl (meth)acrylate, n-pentyl (meth)acrylate, n-hexyl (meth)acrylate, n-octyl (meth)acrylate, n-decyl (meth)acrylate, and 2-ethylhexyl acrylate.

In addition, n-decyl (meth)acrylate, n-dodecyl (meth)acrylate, n-octadecyl acrylate, cyanomethyl (meth)acrylate, 1-cyanoethyl (meth)acrylate, 2-cyanoethyl (meth)acrylate, 1-cyanopropyl (meth)acrylate, 2-cyanopropyl (meth)acrylate, 3-cyanopropyl (meth)acrylate, 4-cyanobutyl (meth)acrylate, 6-cyanohexyl (meth)acrylate, 2-ethyl-6-cyanohexyl (meth)acrylate, 8-cyanooctyl (meth)acrylate or the like may be copolymerized.

Alternatively, an alkoxyalkyl acrylate such as 2-methoxyethyl acrylate, 2-ethoxyethyl acrylate, 2-(n-propoxy)ethyl acrylate, 2-(n-butoxy)ethyl acrylate, 3-methoxypropyl acrylate, or 2-(n-butoxy)propyl acrylate may be copolymerized.

Further, a fluorine-containing (meth)acrylic ester, such as 1,1-dihydroperfluoroethyl (meth)acrylate, 1,1-dihydroperfluoropropyl (meth)acrylate, 1,1,5-trihydroperfluorohexyl (meth)acrylate, 1,1,2,2-tetrahydroperfluoropropyl (meth)acrylate, 1,1,7-trihydroperfluoroheptyl (meth)acrylate, 1,1-dihydroperfluorooctyl (meth)acrylate, or 1,1-dihydroperfluorodecyl (meth)acrylate; a hydroxyl group-containing (meth)acrylic ester, such as 1-hydroxypropyl (meth)acrylate, 2-hydroxypropyl (meth)acrylate, or hydroxyethyl (meth)acrylate; or a tertiary amino group-containing (meth)acrylic ester such as diethylaminoethyl (meth)acrylate or dibutylaminoethyl (meth)acrylate may be copolymerized.

Increase in the blending rate for example of n-butyl acrylate, among the alkyl (meth)acrylate unsaturated monomers above, leads to improvement in the low-temperature resistance of the acrylic rubber obtained and also increase in the blending rate of methyl acrylate to improvement in oil resistance.

Examples of the copolymerizable monomers include, but are not limited to, alkyl vinyl ketones such as methyl vinyl ketone; vinyl and allyl ethers such as vinyl ethyl ether and allyl methyl ether; vinyl aromatic compounds such as styrene, α-methylstyrene, chlorostyrene, vinyltoluene, and vinylnaphthalene; vinyl nitriles such as acrylonitrile and methacrylonitrile; and ethylenic unsaturated compounds such as acrylamide, vinyl acetate, ethylene, propylene, butadiene, isoprene, pentadiene, vinyl chloride, vinylidene chloride, vinyl fluoride, vinylidene fluoride, vinyl propionate, and alkyl fumarate.

An acrylic rubber composition, when copolymerized with ethylene or propylene, gives a vulcanizate with improved low-temperature resistance. The copolymerization amount of ethylene and propylene is 15 parts by mass or less, preferably 10 parts by mass or less with respect to 100 parts by mass of the acrylic rubber. It is possible when the copolymerization amount of ethylene and propylene is in the range above to improve the low-temperature resistance and preserve the oil resistance of the vulcanizate.

In particular, an epoxy group-containing acrylic rubber prepared by copolymerization of an alkyl (meth)acrylate ester above with a crosslinkable monomer is used in the present invention. The crosslinkable monomers typically include epoxy group-containing monomers such as glycidyl acrylate, glycidyl methacrylate, allyl glycidyl ether, and methallyl glycidyl ether. The acrylic rubber according to the present invention desirably contains these crosslinkable monomer units in an amount of 0 to 10 wt %, preferably 0.1 to 5 wt %, and particularly preferably 0.5 to 3 wt %.

The epoxy group-containing acrylic rubber can be produced by copolymerizing the monomers by any known method, for example by emulsion polymerization, suspension polymerization, solution polymerization, or bulk polymerization.

It is possible according to the present invention to obtain favorable vulcanizates such as rubber hoses and sealing parts by combining an epoxy group-containing acrylic rubber with silica, an imidazole compound, and a silane-coupling agent.

Silica with a pH in the range of 5.5 to 9.0 is preferable and silica with a pH in the range of 7.0 to 8.0 is more preferable. Examples of the silica products include Nipsil ER and Nipsil VN3 produced by Tosoh Silica Corporation, and the like. Unfavorably, silica with a pH of lower than 5.5 gives a composition with shorter scorch time and thus with reduced processing stability, while silica with a pH of higher than 9.0 gives a composition with decreased vulcanization rate and insufficient tensile strength. The pH of the silica, as used in the present invention, is a value determined by extraction at normal temperature (JIS K5101-17-2).

The extraction at normal temperature is a method of determining the pH of the suspension of a sample (silica). The suspension is prepared by adding water to the sample. The sample concentration in the suspension is adjusted to 10 mass %. The pH is determined, after the suspension is agitated vigorously in a glass container for 1 minute and left still for 5 minutes.

The amount of silica favorably added is 20 to 80 parts by mass, more preferably 25 to 70 parts by mass, with respect to 100 parts by mass of the acrylic rubber. When the addition amount of silica is less than 20 parts by mass, it is needed to add carbon to compensate insufficiency in hardness and tensile strength. One favorable characteristic of silica is electrical resistance. However, addition of carbon makes the resistance of the entire composition insufficient at a specific volume resistivity of 10⁷ Ω•cm or less. Alternatively, when the addition amount of silica is more than 80 parts by mass, it unfavorably leads to drastic increase of the viscosity of the entire composition and decrease in processability.

The addition amount of the imidazole compound is preferably 0.1 to 5 parts by mass and more preferably 0.3 to 4 parts by mass, with respect to 100 parts by mass of the acrylic rubber. An addition amount of the imidazole compound of less than 0.1 part by mass leads to insufficient vulcanization reaction, while an addition amount of more than 5 parts by mass to excessive vulcanization, leading to deterioration in compression set resistance at high temperature.

Examples of the imidazole compounds include, but are not limited to, 2-(4-fluorophenyl)-1-methylbenzimidazole, 1-methyl-2-phenylimidazole, butylcarbamoyl-2-benzimidazole, 1-decylimidazole, 1,5-dicyclohexylimidazole, 1-(2,4,6-triisopropylbenzenesulfonyl)imidazole, 2,2-dithiobis(4-t-butyl-1-isopropylimidazole), 1-cyanoethyl-2-methylimidazole, 1-cyanoethyl-2-phenylimidazole, 1-cyanoethyl-2-ethyl-4-methylimidazole, 1-cyanoethyl-2-undecylimidazole, 1-cyanoethyl-2-methylimidazole trimellitate, 1-cyanoethyl-2-phenylimidazole trimellitate, I-eyanoethyl-2-ethyl-4-methylimidazole trimellitate, 1-cyanoethyl-2-undecylimidazole trimellitate, 5-chloro-1-methylimidazole, 2-mercapto-1-methylimidazole, 1-trifluoroacetylimidazole, 4-methyl-2-phenylimidazole, 2-benzimidazolepropionic acid, 2-imidazolecarboxylic acid, 2-allylthiobenzimidazole, 2,5,6-trimethylbenzimidazole, 4,5-dimethyl-2-phenylimidazole, 2-methylimidazole, 2-ethylimidazole, 2-hydroxybenzimidazole, 2-mercaptobenzimidazole, 2-(4-thiazoyl)benzimidazole, 2-phenylimidazole, 2-(2-pyridyl)benzimidazole, 2-undecylimidazole, 4,5-diphenyl-2-imidazolethiol, 4,5-dimethyl-2-phenylimidazole, 1-(4-chlorobenzyl)-2-(1-pyrrolidinyl-methyl)benzimidazole, 2,4,5-triphenylimidazole, 1,1-carbonyldiimidazole, 1,1-thiocarbonyldiimidazole, 2-nitroimidazole, 2-mercaptoimidazole, 1,2-dimethylimidazole, 2,4,5-tribromoimidazole, 2-imidazolecarboxyaldehyde, 2-methyl-5-nitroimidazole, 4-hydroxymethylimidazole, 4,5-dicyanoimidazole, benzimidazole, 4,5-diphenylimidazole, 4,5-dichloroimidazole, 4-nitroimidazole, 5-amino-4-nitroimidazole, 4-imidazolecarboxylic acid, and 5-imidazolethiocarboxylic acid, and 1-cyanoethyl-2-methylimidazole is used favorably.

The addition amount of the silane-coupling agent is preferably 0.1 to 2 parts by mass with respect to 100 parts by mass of the acrylic rubber. Unfavorably, an addition amount of less than 0.1 part by mass leads to insufficient tensile strength or compression set, while an addition amount of more than 2 parts by mass to deterioration in elongation.

Examples of the silane-coupling agents include, but are not limited to, 3-glycidoxypropyltrimethoxysilane, 3-glycidoxypropyltriethoxysilane, 2-(3,4-epoxycyclohexyl)ethyltrimethoxysilane, 3-glycidoxypropylmethyldimethoxysilane, 3-glycidoxypropyldimethylmethoxysilane, 3-glycidoxypropyldimethylethoxysilane, 3-glycidoxypropylmethyldiethoxysilane, 3-aminopropyltrimethoxysilane, 3-glycidoxypropyldimethoxyisopropylsilane, 3-glycidoxypropyldimethoxybutylsilane, 3-glycidoxypropylethoxy-2-methyl-4-phenylsilane, 3-glycidoxypropyldimethoxy-4-methylphenylsilane, 3-glycidoxypropylethoxybutylsilane, 3-glycidoxypropylmethoxybutylsilane, 3-glycidoxypropyltrimethylsilane, 3-glycidoxypropylmethacrylosilane, 3-chloropropyldimethoxyethylsilane and the like, and particularly preferable are dialkoxysilanes having two alkoxy groups such as 3-glycidoxypropylmethyldimethoxysilane and 3-glycidoxypropylmethyldiethoxysilane and monoalkoxysilanes having one alkoxy group such as 3-glycidoxypropyldimethylmethoxysilane and 3-glycidoxypropyldimethylethoxysilane.

It is more preferable to add a silane-coupling agent having a glycidoxy group and two alkoxy groups in an amount of 0.1 to 2 parts by mass with respect to 100 parts by mass of the epoxy group-containing acrylic rubber. The silane-coupling agents having two alkoxy groups are, for example, diethoxyethyl group-containing silane-coupling agents, dimethoxyphenyl group-containing silane-coupling agents, dimethoxymethyl group-containing silane-coupling agents, and dimethoxybutyl group-containing silane-coupling agents.

In practical use, the acrylic rubber composition according to the present invention may be molded and vulcanized, as it is added according to its application with additives such as fillers, plasticizers, aging inhibitors, stabilizers, lubricants, and reinforcing agents. In addition, vulcanizing agents other than the imidazole compound (B) according to the present invention may be added for regulation of vulcanization.

Two or more of fillers other than silica, such as carbon black and calcium carbonate for surface treatment, and reinforcing agents can be used in combination, depending on the required physical properties of the rubber. The total addition amount of these fillers and reinforcing agents (including silica) is preferably 30 to 200 parts by mass with respect to 100 parts by mass of the acrylic rubber.

The plasticizers added may be those commonly used for rubbers. Examples thereof include ester-based plasticizers, ether-based plasticizers such as polyoxyethylene ethers, ether-ester-based plasticizers and the like, but they are not limited to the plasticizers above and various other plasticizers can be used. The plasticizer may be added up to an amount of about 50 parts by mass with respect to 100 parts by mass of the acrylic rubber.

Examples of the aging inhibitors include amine-based agents, metal carbamate salts, phenol-based agents, waxes and the like, and amine-based aging inhibitors are preferable. The aging inhibitor can be added in an amount of 0.5 to 10 parts by mass with respect to 100 parts by mass of the acrylic rubber.

The rubber component in the acrylic rubber composition for use in the present invention contains an acrylic rubber as the principal component, but may contain, as needed in addition to the acrylic rubber, natural rubbers and synthetic rubbers such as IIR (isobutylene-isoprene copolymers), BR (butadiene rubbers), NBR (nitrile rubbers), HNBR (hydrogenated nitrile rubbers), CR (chloroprene rubbers), EPDM (ethylene propylene diene rubbers), FKM (fluorine rubbers), Q (silicone rubbers), CSM (chlorosulfonated polyethylene rubbers), CO (epichlorohydrin rubbers), ECO (epichlorohydrin-ethylene oxide copolymers), CM (chlorinated polyethylene) and the like.

The machines used for blending, molding, and vulcanizing the acrylic rubber, the acrylic rubber composition, and the vulcanizate thereof according to the present invention may be any machine commonly used in the rubber industry.

The acrylic rubber, the acrylic rubber composition, and the vulcanizate thereof according to the present invention are used especially as rubber hoses and also as sealing parts such as gaskets and packings. They are used, in the form of rubber hose, typically as automobile rubber hoses that demand high durability, such as transmission oil cooler hoses, engine oil cooler hoses, turbo intercooler hoses, turbo air duct hoses, power steering hoses, hot air hoses, and radiator hoses, and also as hoses for high-pressure oils, hoses for fuels, and hoses for draining for use in industrial and construction machines.

Alternatively in the form of sealing parts, they are used typically as automobile sealing parts, such as engine head cover gaskets, oil pan gaskets, oil seals, lip seal gaskets, O rings, transmission seal gaskets, crankshaft and camshaft seal gaskets, power-steering seal belt cover seals, and CVJ and R&P boot materials. In particular, the acrylic rubber, the acrylic rubber composition, and the vulcanizate thereof according to the present invention are superior not only in mechanical properties, but also in low-temperature resistance, oil resistance, and heat resistance and thus, they are used extremely favorably as rubber hoses and sealing parts such as gaskets for automobiles, which have been used in severer environmental conditions recently.

As for the configuration of the rubber hose, they may be applied to a single-layer hose of the acrylic rubber composition according to the present invention or to a composite hose consisting of layers of the acrylic rubber according to the present invention and internal, intermediate, and/or external layers of synthetic rubbers other than the acrylic rubber according to the present invention, such as fluorine rubbers, fluorine-modified acrylic rubbers, hydrin rubbers, CSM, CR, NBR, HNBR, and ethylene-propylene rubbers, depending on the application of the rubber hose. Depending on the requirements for the rubber hose, it is possible, as commonly practiced, to place reinforcing fibers or wires in the intermediate layer of hose or in the outermost layer of rubber hose.

### Examples

Hereinafter, the present invention will be described in detail with reference to Examples, but it should be understood that the present invention is not particularly restricted by these Examples.

### < Preparation of acrylic rubber >

8.8 kg of butyl acrylate, 3.0 kg of vinyl acetate, 16 kg of 4 mass % aqueous solution of partially saponified vinylalcohol, 23 g of sodium acetate, and 0.4 kg of glycidyl methacrylate were placed in a pressure reaction vessel and agitated thoroughly with a stirrer in advance, to give a homogeneous suspension. After substitution of the air in the upper region of the vessel with nitrogen, ethylene was added thereto under pressure and the pressure was adjusted to 4.3 MPa. After the suspension was kept agitated and the vessel was kept at 55°C, aqueous ammonium persulfate solution was fed thereto under pressure through a separate injection port, to initiate polymerization. The temperature in the vessel was kept at 55°C during reaction and the reaction was terminated after 9 hours. Aqueous sodium borate solution was added to the polymerization solution produced for solidification of the polymer, which was dehydrated and dried, to give an acrylic rubber. The acrylic rubber obtained had a copolymer composition consisting of 80 parts by mass of n-butyl acrylate monomer unit, 15 parts by mass of vinyl acetate, 3 parts by mass of ethylene, and 2 parts by mass of glycidyl methacrylate. The composition of the monomer unit components was determined quantitatively by obtaining its nuclear magnetic resonance spectrum.

### [Example 1]

270 g of the acrylic rubber thus obtained was kneaded in a pressurized kneader test machine, together with 2.7 g of stearic acid, 2.7 g of aging inhibitor A, 67.5 g of carbon black, 108 g of silica (1), 0.5 g of stearylamine, 2.7 g of liquid paraffin, 1.4 g of 3-glycidoxypropyldimethoxymethylsilane, and 27 g of a plasticizer. 3.8 g of 1-cyanoethyl-2-methylimidazole, 0.8 g of ammonium benzoate, and 2.7 g of sodium laurylsulfate were added to the composition obtained and the mixture was kneaded using an 8-inch open roll, to give an acrylic rubber composition. The acrylic rubber composition obtained was heat-treated at 170°C for 20 minutes with an electrically-heated heat press and then at 170°C for 4 hours in a Geer oven, to give a vulcanizate of the acrylic rubber composition.

### [Example 2]

An acrylic rubber composition was obtained by a method similar to Example 1, except that 2.7 g of 3-glycidoxypropyldimethoxymethylsilane was added.

### [Example 3]

An acrylic rubber composition was obtained by a method similar to Example 1, except that 4.1 g of 3-glycidoxypropyldimethoxymethylsilane was added.

### [Example 4]

An acrylic rubber composition was obtained by a method similar to Example 1, except that 2.7 g of 3-glycidoxypropyldiethoxymethylsilane was added, replacing 3-glycidoxypropyldimethoxymethylsilane.

### [Example 5]

An acrylic rubber composition was obtained by a method similar to Example 1, except that 2.7 g of 3-glycidoxypropyldimethoxyisopropylsilane was added, replacing 3-glycidoxypropyldimethoxymethylsilane.

### [Example 6]

An acrylic rubber composition was obtained by a method similar to Example 1, except that 2.7 g of 3-glycidoxypropyldimethoxybutylsilane was added, replacing 3-glycidoxypropyldimethoxymethylsilane.

### [Example 7]

An acrylic rubber composition was obtained by a method similar to Example 1, except that 2.7 g of 3-glycidoxypropyldiethoxyphenylsilane was added, replacing 3-glycidoxypropyldimethoxymethylsilane.

### [Example 8]

An acrylic rubber composition was obtained by a method similar to Example 1, except that 2.7 g of 3-glycidoxypropyldimethoxy-4-methylphenylsilane was added, replacing 3-glycidoxypropyldimethoxymethylsilane.

### [Example 9]

An acrylic rubber composition was obtained by a method similar to Example 2, except that the addition amount of carbon black was changed to 121.5 g and that of silica to 54 g.

### [Example 10]

An acrylic rubber composition was obtained by a method similar to Example 2, except that carbon black was not added and the addition amount of silica was changed to 189 g.

### [Example 11]

An acrylic rubber composition was obtained by a method similar to Example 2, except that the addition amount of 1-cyanoethyl-2-methylimidazole was changed to 0.81 g.

### [Example 12]

An acrylic rubber composition was obtained by a method similar to Example 2, except that the addition amount of 1-cyanoethyl-2-methylimidazole was changed to 10.8 g.

### [Example 13]

An acrylic rubber composition was obtained by a method similar to Example 2, except that 1-methyl-2-phenylimidazole was added, replacing 1-cyanoethyl-2-methylimidazole.

### [Example 14]

An acrylic rubber composition was obtained by a method similar to Example 2, except that 1,2-dimethylimidazole was added, replacing 1-cyanoethyl-2-methylimidazole.

### [Example 15]

An acrylic rubber composition was obtained by a method similar to Example 2, except that 2-imidazolecarboxylic acid was added, replacing 1-cyanoethyl-2-methylimidazole.

### [Example 16]

An acrylic rubber composition was obtained by a method similar to Example 2, except that 4,5-dimethyl-2-phenylimidazole was added, replacing 1-cyanoethyl-2-methylimidazole.

### [Example 17]

An acrylic rubber composition was obtained by a method similar to Example 2, except that 108 g of silica (2) was added, replacing silica (1).

### [Example 18]

An acrylic rubber composition was obtained by a method similar to Example 1, except that the addition amount of 3-glycidoxypropyldimethoxymethylsilane was changed to 0.27 g.

### [Example 19]

An acrylic rubber composition was obtained by a method similar to Example 1, except that the addition amount of 3-glycidoxypropyldimethoxymethylsilane was changed to 5.4 g.

### [Comparative Example 1]

An acrylic rubber composition was obtained by a method similar to Example 1, except that 2.7 g of 3-glycidoxypropyl trimethoxysilane was added, replacing 3-glycidoxypropyldimethoxymethylsilane.

### [Comparative Example 2]

An acrylic rubber composition was obtained by a method similar to Example 1, except that 2.7 g of 3-glycidoxypropyltrimethylsilane was added, replacing 3-glycidoxypropyldimethoxymethylsilane.

### [Comparative Example 3]

An acrylic rubber composition was obtained by a method similar to Example 1, except that 2.7 g of 3-methacryloxypropyldimethoxymethylsilane was added, replacing 3-glycidoxypropyldimethoxymethylsilane.

### [Comparative Example 4]

An acrylic rubber composition was obtained by a method similar to Example 1, except that 2.7 g of bis(triethoxylsilylpropyl)tetrasulfide was added, replacing 3-glycidoxypropyldimethoxymethylsilane.

### [Comparative Example 5]

An acrylic rubber composition was obtained by a method similar to Example 1, except that 2.7 g of 3-chloropropyldimethoxymethylsilane was added, replacing 3-glycidoxypropyldimethoxymethylsilane.

### [Comparative Example 6]

An acrylic rubber composition was obtained by a method similar to Example 1, except that 3-glycidoxypropyldimethoxymethylsilane was not added.

### [Comparative Example 7]

An acrylic rubber composition was obtained by a method similar to Example 2, except that 108 g of silica (3) was added, replacing silica (1).

### [Comparative Example 8]

An acrylic rubber composition was obtained by a method similar to Example 2, except that 1-cyanoethyl-2-methylimidazole was not added.

Each of the acrylic compositions of Examples 2 to 19 and Comparative Examples 1 to 8 was vulcanized under the condition identical with that in Example 1 (at 170°C for 20 minutes in electrically-heated heat press and at 170°C for 4 hours in Geer oven), to give a vulcanizate. The tensile strength, elongation at break, hardness, and compression set resistance of each of the vulcanizates of Examples 1 to 19 and Comparative Examples 1 to 8 were evaluated by the following "measurement methods."

### < Measurement methods >

The tensile strength and the elongation at break were determined according to JIS K6251. Specifically, the tensile strength is the maximum tensile force (MPa) applied when the test piece is broken. The elongation at break (breaking elongation), which is the elongation when the test piece is broken, is expressed as a relative ratio (%) from the original length. The hardness is a value determined according to JIS K6253 by using a durometer. The compression set was determined according to JIS K6262. Specifically, the compression set is the deformation remaining in the test piece, as expressed by relative rate (%), after it is deformed under compression at 150°C for 70 hours and the force for compressive deformation was eliminated.

The results of the evaluation tests above are summarized, together with blending compositions (with respect to 100 parts by mass of the acrylic rubber) in the following Tables 1 to 3.

**[Table 1]**

| Table 1: Blending composition and evaluation results (Examples 1 to 9) | | | | | | | | | | | |
|---|---|---|---|---|---|---|---|---|---|---|---|
| | | | Example 1 | Example 2 | Example 3 | Example 4 | Example 5 | Example 6 | Example 7 | Example 8 | Example 9 |
| Blending composition (parts by mass) | Silane-coupling agent (kind) | | A | A | A | B | C | D | E | F | A |
| | Epoxy group-containing acrylic rubber | | 100 | 100 | 100 | 100 | 100 | 100 | 100 | 100 | 100 |
| | Stearic acid | | 1 | 1 | 1 | 1 | 1 | 1 | 1 | 1 | 1 |
| | Aging inhibitor A | | 1 | 1 | 1 | 1 | 1 | 1 | 1 | 1 | 1 |
| | Carbon black | | 25 | 25 | 25 | 25 | 25 | 25 | 25 | 25 | 45 |
| | Silica (1) | | 40 | 40 | 40 | 40 | 40 | 40 | 40 | 40 | 20 |
| | Silica (2) | | - | - | - | - | - | - | - | - | - |
| | Silica (3) | | - | - | - | - | - | - | - | - | - |
| | Silane-coupling agent | | 0.5 | 1 | 1.5 | 1 | 1 | 1 | 1 | 1 | 1 |
| | Liquid paraffin | | 1 | 1 | 1 | 1 | 1 | 1 | 1 | 1 | 1 |
| | RS-735 | | 10 | 10 | 10 | 10 | 10 | 10 | 10 | 10 | 10 |
| | FARMIN #80 | | 0.2 | 0.2 | 0.2 | 0.2 | 0.2 | 0.2 | 0.2 | 0.2 | 0.2 |
| | Sodium laurylsulfate | | 1.0 | 1.0 | 1.0 | 1.0 | 1.0 | 1.0 | 1.0 | 1.0 | 1.0 |
| | Imidazole (1) | | 1.4 | 1.4 | 1.4 | 1.4 | 1.4 | 1.4 | 1.4 | 1.4 | 1.4 |
| | Imidazole (2) | | - | - | - | - | - | - | - | - | - |
| | Imidazole (3) | | - | - | - | - | - | - | - | - | - |
| | Imidazole (4) | | - | - | - | - | - | - | - | - | - |
| | Imidazole (5) | | - | - | - | - | - | - | - | - | - |
| | Ammonium benzoate | | 0.3 | 0.3 | 0.3 | 0.3 | 0.3 | 0.3 | 0.3 | 0.3 | 0.3 |
| | Total | | 181.4 | 181.9 | 182.4 | 181.9 | 181.9 | 181.9 | 181.9 | 181.9 | 181.9 |
| Evaluation results | After secondary vulcanization | Tensile strength (MPa) | 8.6 | 9.9 | 10.7 | 9.4 | 9.2 | 9.4 | 9.7 | 9.6 | 9.0 |
| | | Elongation (%) | 348 | 241 | 219 | 345 | 320 | 294 | 288 | 292 | 280 |
| | | Hardness | 76 | 77 | 76 | 70 | 75 | 74 | 74 | 73 | 75 |
| | Compression set | 150°C × 70 h (%) | 54 | 50 | 44 | 49 | 51 | 51 | 53 | 54 | 48 |
| | Overall rating | | ○ | ○ | ○ | ○ | ○ | ○ | ○ | ○ | ○ |

**[Table 2]**

| Table 2: Blending composition and evaluation results (Examples 10 to 19) | | | | | | | | | | | | |
|---|---|---|---|---|---|---|---|---|---|---|---|---|
| | | | Example 10 | Example 11 | Example 12 | Example 13 | Example 14 | Example 15 | Example 16 | Example 17 | Example 18 | Example 19 |
| Blending composition (parts by mass) | Silane-coupling agent (kind) | | A | A | A | A | A | A | A | A | A | A |
| | Epoxy group-containing acrylic rubber | | 100 | 100 | 100 | 100 | 100 | 100 | 100 | 100 | 100 | 100 |
| | Stearic acid | | 1 | 1 | 1 | 1 | 1 | 1 | 1 | 1 | 1 | 1 |
| | Aging inhibitor A | | 1 | 1 | 1 | 1 | 1 | 1 | 1 | 1 | 1 | 1 |
| | Carbon black | | - | 25 | 25 | 25 | 25 | 25 | 25 | 25 | 25 | 25 |
| | Silica (1) | | 70 | 40 | 40 | 40 | 40 | 40 | 40 | - | 40 | 40 |
| | Silica (2) | | - | - | - | - | - | - | - | 40 | - | - |
| | Silica (3) | | - | - | - | - | - | - | - | - | - | - |
| | Silane-coupling agent | | 1 | 1 | 1 | 1 | 1 | 1 | 1 | 1 | 0.1 | 2 |
| | Liquid paraffin | | 1 | 1 | 1 | 1 | 1 | 1 | 1 | 1 | 1 | 1 |
| | RS-735 | | 10 | 10 | 10 | 10 | 10 | 10 | 10 | 10 | 10 | 10 |
| | FARMIN #80 | | 0.2 | 0.2 | 0.2 | 0.2 | 0.2 | 0.2 | 0.2 | 0.2 | 0.2 | 0.2 |
| | Sodium laurylsulfate | | 1.0 | 1.0 | 1.0 | 1.0 | 1.0 | 1.0 | 1.0 | 1.0 | 1.0 | 1.0 |
| | Imidazole (1) | | 1.4 | 0.3 | 4.0 | - | - | - | - | 1.4 | 1.4 | 1.4 |
| | Imidazole (2) | | - | - | - | 1.4 | - | - | - | - | - | - |
| | Imidazole (3) | | - | - | - | - | 1.4 | - | - | - | - | - |
| | Imidazole (4) | | - | - | - | - | - | 1.4 | - | - | - | - |
| | Imidazole (5) | | - | - | - | - | - | - | 1.4 | - | - | - |
| | Ammonium benzoate | | 0.3 | 0.3 | 0.3 | 0.3 | 0.3 | 0.3 | 0.3 | 0.3 | 0.3 | 0.3 |
| | Total | | 186.9 | 180.8 | 184.5 | 181.9 | 181.9 | 181.9 | 181.9 | 181.9 | 181.0 | 182.9 |
| Evaluation results | After secondary vulcanization | Tensile strength (MPa) | 8.1 | 7.9 | 11.4 | 9.2 | 9.4 | 9.6 | 9.6 | 6.6 | 6.9 | 11.2 |
| | | Elongation (%) | 420 | 441 | 205 | 330 | 315 | 346 | 332 | 428 | 402 | 202 |
| | | Hardness | 78 | 69 | 81 | 72 | 70 | 73 | 71 | 80 | 72 | 79 |
| | Compression set | 150°C × 70 h (%) | 55 | 56 | 55 | 51 | 55 | 53 | 53 | 58 | 59 | 51 |
| | Overall rating | | ○ | ○ | ○ | ○ | ○ | ○ | ○ | ○ | ○ | ○ |

**[Table 3]**

| Table 3: Blending composition and evaluation results (Comparative Examples 1 to 8) | | | | | | | | | | |
|---|---|---|---|---|---|---|---|---|---|---|
| | | | Comparative Example 1 | Comparative Example 2 | Comparative Example 3 | Comparative Example 4 | Comparative Example 5 | Comparative Example 6 | Comparative Example 7 | Comparative Example 8 |
| Blending composition (parts by mass) | Silane-coupling agent (kind) | | G | H | I | J | K | None | A | A |
| | Epoxy group-containing acrylic rubber | | 100 | 100 | 100 | 100 | 100 | 100 | 100 | 100 |
| | Stearic acid | | 1 | 1 | 1 | 1 | 1 | 1 | 1 | 1 |
| | Aging inhibitor A | | 1 | 1 | 1 | 1 | 1 | 1 | 1 | 1 |
| | Carbon black | | 25 | 25 | 25 | 25 | 25 | 25 | 25 | 25 |
| | Silica (1) | | 40 | 40 | 40 | 40 | 40 | 40 | - | 40 |
| | Silica (2) | | - | - | - | - | - | - | - | - |
| | Silica (3) | | - | - | - | - | - | - | 40 | - |
| | Silane-coupling agent | | 1 | 1 | 1 | 1 | 1 | - | 1 | 1 |
| | Liquid paraffin | | 1 | 1 | 1 | 1 | 1 | 1 | 1 | 1 |
| | R-735 | | 10 | 10 | 10 | 10 | 10 | 10 | 10 | 10 |
| | FARMIN #80 | | 0.2 | 0.2 | 0.2 | 0.2 | 0.2 | 0.2 | 0.2 | 0.2 |
| | Sodium laurylsulfate | | 1.0 | 1.0 | 1.0 | 1.0 | 1.0 | 1.0 | 1.0 | 1.0 |
| | Imidazole (1) | | 1.4 | 1.4 | 1.4 | 1.4 | 1.4 | 1.4 | 1.4 | - |
| | Imidazole (2) | | - | - | - | - | - | - | - | - |
| | Imidazole (3) | | - | - | - | - | - | - | - | - |
| | Imidazole (4) | | - | - | - | - | - | - | - | - |
| | Imidazole (5) | | - | - | - | - | - | - | - | - |
| | Ammonium benzoate | | 0.3 | 0.3 | 0.3 | 0.3 | 0.3 | 0.3 | 0.3 | 0.3 |
| | Total | | 181.9 | 181.9 | 181.9 | 181.9 | 181.9 | 180.9 | 181.9 | 180.5 |
| Evaluation results | After secondary vulcanization | Tensile strength (MPa) | 7.7 | 9.4 | 9.3 | 8.8 | 8.7 | 6.5 | Not vulcanized | Not vulcanized |
| | | Elongation (%) | 378 | 273 | 269 | 342 | 306 | 421 | | |
| | | Hardness | 71 | 80 | 77 | 75 | 78 | 70 | | |
| | Compression set | 150°C × 70 h (%) | 61 | 63 | 64 | 60 | 61 | 65 | | |
| | Overall rating | | × | × | × | × | × | × | × | × |

In Tables 1 to 3 above, the aging inhibitor A used was NOCRAC CD produced by Ouchi Shinko Chemical Industrial; carbon black was SEAST 116 produced by Tokai Carbon Co., Ltd.; silica (1) was Nipsil ER produced by Tosoh Silica Corporation (pH: 7.5 to 9.0); silica (2) was Nipsil VN-3 produced by Tosoh Silica Corporation (pH:5.5-6.5); silica (3) was Carplex #1120 produced by Shionogi & Co., Ltd. (pH: 10.4 to 10.9); and stearyl amine was FARMIN 80 produced by Kao Corporation. The plasticizer used was "Adekacizer RS-735" produced by ADEKA Corporation. All other materials used were products available on the market.

In Tables 1 to 3,
imidazole (1) represents 1-cyanoethyl-2-methylimidazole;
imidazole (2) represents 1-methyl-2-phenylimidazole;
imidazole (3) represents 1,2-dimethylimidazole;
imidazole (4) represents 2-imidazolecarboxylic acid;
imidazole (5) represents 4,5-dimethyl-2-phenylimidazole,
A represents 3-glycidoxypropyldimethoxymethylsilane;
B represents 3-glycidoxypropyldiethoxymethylsilane;
C represents 3-glycidoxypropyldimethoxyisopropylsilane;
D represents 3-glycidoxypropyldimethoxybutylsilane;
E represents 3-glycidoxypropyldiethoxyphenylsilane;
F represents 3-glycidoxypropyldimethoxy-4-methylphenylsilane,
G represents 3-glycidoxypropyltrimethoxysilane;
H represents 3-glycidoxypropyltrimethylsilane;
I represents 3-methacryloxypropyldimethoxymethylsilane;
J represents bis(triethoxysilylpropyl)tetrasulfide; and
K represents 3-chloropropyldimethoxymethylsilane.

Criteria for the "overall rating" in Tables 1 to 3 above are as follows:
○: the vulcanizate has a compression set of less than 60% and a tensile strength of 6.6 MPa or more; and
×: the vulcanizate has a compression set of 60% or more and /or a tensile strength of less than 6.6 MPa.

The case when no vulcanization occurred was also included in the group of "×."

As obvious from comparison of the results of Examples and Comparative Examples in Tables 1 to 3, the acrylic rubber composition according to the present invention gives a vulcanizate superior in physical properties under ambient atmosphere (tensile strength, elongation, and hardness) and also in compression set resistance. When the content of carbon black is taken into consideration, it is obvious that the acrylic rubber compositions of Examples give vulcanizates with sufficient hardness and tensile strength, even when they contain carbon black in an amount of less than 25 parts by mass with respect to 100 parts by mass of the acrylic rubber.

In particular, the results in Examples 1 to 19 and Comparative Example 1 show that the compression set resistance is improved more significantly when a silane-coupling agent having an alkoxy group number of 2 or less is used. In addition, the results in Examples 1 to 19 also show that it is possible to obtain vulcanizates satisfactory in mechanical properties, such as tensile strength and compression set resistance, when the silane-coupling agent is used in an amount in the range of 0.1 part by mass or more to 2.0 parts by mass or less with respect to 100 parts by mass of the epoxy group-containing acrylic rubber.

## Claims

1. An acrylic rubber composition, comprising the following components (A) to (D):
(A) an epoxy group-containing acrylic rubber;
(B) an imidazole compound represented by the following General Formula (1):
[C. 3] 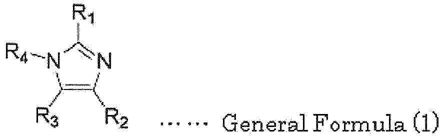 (in General Formula (1), R₁ represents a hydrogen atom, an alkyl group, a substituted alkyl group, an aryl group, or a carboxyl group; R₂ represents a hydrogen atom or an alkyl group; R₃ represents a hydrogen atom or an alkyl group; and R₄ represents a hydrogen atom, an alkyl group, a substituted alkyl group, or a carbonyl group):
(C) silica at a pH of 5.5 to 9.0; and
(D) a silane-coupling agent represented by the following General Formula (2):
[C. 4] 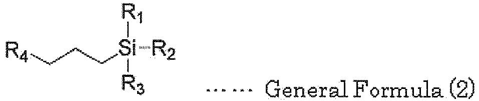 (in General Formula (2), R₁, R₂, and R₃ each represent an alkyl group, an aryl group, a substituted aryl group, or an alkoxy group; one or two substituent groups of R₁, R₂, and R₃ contain an alkoxy group; and R₄ represents a glycidoxy group).

2. The acrylic rubber composition according to Claim 1, wherein the silica is contained in an amount of 20 to 80 parts by mass with respect to 100 parts by mass of the epoxy group-containing acrylic rubber.

3. The acrylic rubber composition according to Claim 1 or 2,
wherein the silane-coupling agent is contained in an amount of 0.1 to 2 parts by mass with respect to 100 parts by mass of the epoxy group-containing acrylic rubber.

4. The acrylic rubber composition according to any one of Claims 1 to 3, wherein the imidazole compound is contained in an amount of 0.1 to 5 parts by mass with respect to 100 parts by mass of the epoxy group-containing acrylic rubber.

5. The acrylic rubber composition according to any one of Claims 1 to 4, wherein:
the silane-coupling agent is one or more agents selected from the group consisting of diethoxyethyl group-containing silane-coupling agents, dimethoxyphenyl group-containing silane-coupling agents, dimethoxymethyl group-containing silane-coupling agents, and dimethoxybutyl group-containing silane-coupling agents; and the silane-coupling agent is contained in an amount of 0.1 to 2 parts by mass with respect to 100 parts by mass of the epoxy group-containing acrylic rubber.

6. A vulcanizate, prepared by vulcanizing the acrylic rubber composition according to any one of Claims 1 to 5.

7. A hose part, comprising the vulcanizate according to Claim 6.

8. A sealing part, comprising the vulcanizate according to Claim 6.

## Patentansprüche

1. Acrylkautschukzusammensetzung, umfassend die folgenden Komponenten (A) bis (D):
(A) ein Epoxygruppen enthaltender Acrylkautschuk;
(B) eine Imidazolverbindung, dargestellt durch die folgende allgemeine Formel (1):
[C. 3] 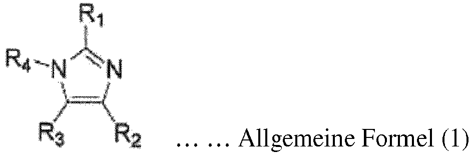 (in der allgemeinen Formel (1) steht R₁ für ein Wasserstoffatom, einen Alkylrest, einen substituierten Alkylrest, einen Arylrest oder eine Carboxylgruppe; steht R₂ für ein Wasserstoffatom oder einen Alkylrest; steht R₃ für ein Wasserstoffatom oder einen Alkylrest; und steht R₄ für ein Wasserstoffatom, einen Alkylrest, einen substituierten Alkylrest oder eine Carbonylgruppe):
(C) Siliciumdioxid mit einem pH-Wert von 5,5 bis 9,0; und
(D) ein Silan-Kupplungsmittel, dargestellt durch die folgende allgemeine Formel (2):
[C. 4] 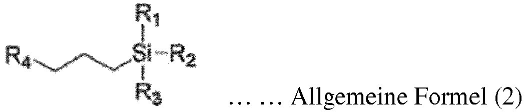 (in der allgemeinen Formel (2) stehen R₁, R₂ und R₃ jeweils für einen Alkylrest, einen Arylrest, einen substituierten Arylrest oder einen Alkoxyrest; enthalten ein oder zwei Substituentenreste von R₁, R₂ und R₃ einen Alkoxyrest; und steht R₄ für eine Glycidoxygruppe).

2. Acrylkautschukzusammensetzung nach Anspruch 1, wobei das Siliciumdioxid in einer Menge von 20 bis 80 Masseteilen bezüglich 100 Masseteilen des Epoxygruppen enthaltenden Acrylkautschuks enthalten ist.

3. Acrylkautschukzusammensetzung nach Anspruch 1 oder 2, wobei das Silan-Kupplungsmittel in einer Menge von 0,1 bis 2 Masseteilen bezüglich 100 Masseteilen des Epoxygruppen enthaltenden Acrylkautschuks enthalten ist.

4. Acrylkautschukzusammensetzung nach einem der Ansprüche 1 bis 3, wobei die Imidazolverbindung in einer Menge von 0,1 bis 5 Masseteilen bezüglich 100 Masseteilen des Epoxygruppen enthaltenden Acrylkautschuks enthalten ist.

5. Acrylkautschukzusammensetzung nach einem der Ansprüche 1 bis 4, wobei:
das Silan-Kupplungsmittel ein oder mehrere Agenzien, ausgewählt aus der Gruppe bestehend aus Diethoxyethylgruppen enthaltenden Silan-Kupplungsmitteln, Dimethoxyphenylgruppen enthaltenden Silan-Kupplungsmitteln, Dimethoxymethylgruppen enthaltenden Silan-Kupplungsmitteln und Dimethoxybutylgruppen enthaltenden Silan-Kupplungsmitteln, ist; und das Silan-Kupplungsmittel in einer Menge von 0,1 bis 2 Masseteilen bezüglich 100 Masseteilen des Epoxygruppen enthaltenden Acrylkautschuks enthalten ist.

6. Vulkanisat, hergestellt durch Vulkanisieren der Acrylkautschukzusammensetzung nach einem der Ansprüche 1 bis 5.

7. Schlauchteil, umfassend das Vulkanisat nach Anspruch 6.

8. Dichtungsteil, umfassend das Vulkanisat nach Anspruch 6.

## Revendications

1. Composition de caoutchouc acrylique, comprenant les composants (A) à (D) suivants :
(A) un caoutchouc acrylique contenant un groupe époxy ;
(B) un composé imidazole représenté par la formule générale (1) suivante :
[C. 3] 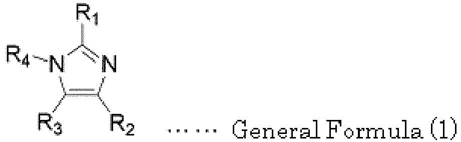 (dans la formule générale (1), R₁ représente un atome d'hydrogène, un groupe alkyle, un groupe alkyle substitué, un groupe aryle ou un groupe carboxyle ; R₂ représente un atome d'hydrogène ou un groupe alkyle ; R₃ représente un atome d'hydrogène ou un groupe alkyle ; et R₄ représente un atome d'hydrogène, un groupe alkyle, un groupe alkyle substitué ou un groupe carbonyle) :
(C) de la silice avec un pH compris entre 5,5 et 9,0 ; et
(D) un agent de couplage de silane représenté par la formule générale (2) suivante :
[C. 4] 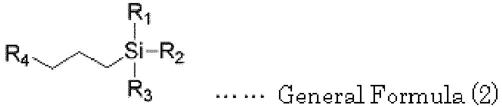 (dans la formule générale (2), R₁, R₂, et R₃ représentent chacun un groupe alkyle, un groupe aryle, un groupe aryle substitué ou un groupe alcoxy ; un ou deux groupes substituants de R₁, R₂, et R₃ contiennent un groupe alcoxy ; et R₄ représente un groupe glycidoxy).

2. Composition de caoutchouc acrylique selon la revendication 1, où la silice est contenue dans une teneur de 20 à 80 parties en masse par rapport à 100 parties en masse du caoutchouc acrylique contenant un groupe époxy.

3. Composition de caoutchouc acrylique selon la revendication 1 ou la revendication 2, où l'agent de couplage de silane est contenu dans une teneur de 0,1 à 2 parties en masse par rapport à 100 parties en masse du caoutchouc acrylique contenant un groupe époxy.

4. Composition de caoutchouc acrylique selon l'une des revendications 1 à 3, où le composé imidazole est contenu dans une teneur de 0,1 à 5 parties en masse par rapport à 100 parties en masse du caoutchouc acrylique contenant un groupe époxy.

5. Composition de caoutchouc acrylique selon l'une quelconque des revendications 1 à 4, où :
l'agent de couplage de silane est constitué d'un ou de plusieurs agents sélectionnés dans le groupe comprenant des agents de couplage de silane contenant un groupe diéthoxyéthyle, des agents de couplage de silane contenant un groupe diméthoxyphényle, des agents de couplage de silane contenant un groupe diméthoxyméthyle, et des agents de couplage de silane contenant un groupe diméthoxybutyle ; et où l'agent de couplage de silane est contenu dans une teneur de 0,1 à 2 parties en masse par rapport à 100 parties en masse du caoutchouc acrylique contenant un groupe époxy.

6. Vulcanisat, préparé par vulcanisation de la composition de caoutchouc acrylique selon l'une quelconque des revendications 1 à 5.

7. Composant de tuyau flexible, comprenant le vulcanisat selon la revendication 6.

8. Composant d'étanchéité, comprenant le vulcanisat selon la revendication 6.
